# EUROPEAN PATENT SPECIFICATION

(11) **EP 0 863 853 B1**
(45) Date of publication and mention of the grant of the patent: **20.10.1999**
(21) Application number: 96942279.9
(22) Date of filing: 29.11.1996
(51) Int. Cl.: C03B 37/05, C03C 1/02, C03C 25/02

(54) **APPARATUS AND PROCESS FOR FORMING MINERAL FIBRES**
VORRICHTUNG UND VERFAHREN ZUR HERSTELLUNG VON MINERALFASERN
APPAREIL ET PROCEDE DE FORMATION DE FIBRES MINERALES

(30) Priority: 01.12.1995 GB 9524607
(43) Date of publication of application: 16.09.1998
(73) Proprietor: Rockwool International A/S, 2640 Hedehusene (DK)
(72) Inventor: TONDER, Flemming, Weiss, DK-4450 Jyderup (DK)
(74) Representative: Lawrence, Peter Robin Broughton
(86) International application number: EP9605299
(87) International publication number: WO9720779

(56) References cited:
- EP-A- 0 195 725
- US-A- 2 944 284
- US-A- 4 433 992
- US-A- 5 123 949
- US-A- 5 232 638

## Description

The invention relates to an improved apparatus for the production of man-made vitreous fibres (MMVF) and to a process using this apparatus.

It is well known to produce MMVF products by melting a charge of appropriately chosen mineral materials, applying the mineral melt to a spinning rotor and causing the melt to be thrown from the periphery of the rotor as fibres, which are then collected as a mineral wool web.

It is often desired to include in the web of fibres additional materials to improve the properties of the mineral wool web. Particulate material can be added in various ways entrained in air, but this is not very satisfactory in practice. See for instance EP-A-530,843 and GB-A-1234075. It would be desirable to be able to include in the mineral wool web solid additives to further improve the properties of the web in a more effective manner than is possible when they are added entrained in air.

Binder is generally applied to the web, which is then passed through an oven in which the binder is cured.

Various methods are known for the application of the binder to the web. It is known to impregnate a preformed mineral wool web with binder solution. This has the disadvantage that the resultant distribution of binder through the web is non-uniform. The concentration of binder tends to be greatest near the surface of the web and least in the centre of the web.

It is also known to add binder to the web by applying it to the fibres during their formation. After the mineral melt has been thrown from the rotor as fibres, the fibres are carried away from the rotor as a substantially annular cloud. When there are several adjacent rotors in a cascade, the individual clouds merge into a single substantially annular cloud around the cascade. The annular cloud is carried forward towards a collector and loses its annular configuration as it travels away from the rotor or rotors.

It is known to spray binder into this cloud of fibres from outside the annular cloud. This process has the disadvantage that application remains rather non-uniform because at the point of application the fibres have usually already begun to form clumps, reducing penetration of the binder.

It is also known to spray binder into the annular cloud from a position within the annular cloud, that is from a point close to or on the axis of rotation of the rotor and forward of the rotor.

It would be desirable to be able to include solid materials in the MMVF product by inclusion in the solution of binder which is sprayed into the fibre cloud without causing blockage or wear of the spraying device.

We describe in our International application WO-A-97/20781 processes in which a slurry of particulate material is sprayed into the annular cloud of fibres.

This application does not belong to the state of the art within the meaning of Article 54 EPC.

Methods for the central application of binder solution are described in WO-A-91/10626, US-A-4,433,992 and US-A-3,343,933. These all describe methods for the centrifugal spraying of the binder solution from a position on the axis of rotation of the rotor, forward of the rotor. In each case, binder solution is supplied to the centrifugal spraying device along a duct which extends through the rotor and rotates with the rotor. Although these systems are appropriate for the supply of a solution, and although US-A-3,343,933 mentions the possibility of applying slurries using the described system, the effect on the slurry of being supplied along the rapidly rotating duct can sometimes be to tend to cause significant centrifugal separation of the particulate solids from the liquid phase. The systems described in these publications can also tend to suffer blockages if used for slurries. Internal wear, due to abrasive entrained particles, can also be a problem.

WO-A-90/15032 describes a system in which a non-rotating fluid flow duct for a gas flow (optionally containing particles) or a binder extends through the rotor and terminates in a non-rotating distribution device. However, in order to achieve a radial distribution of the fluid to be applied it is necessary to provide a number of orifices disposed around the distribution device, which has a diameter of the order of the diameter of the fluid flow duct and considerably smaller than the diameter of the rotor. Therefore when the additive is ejected from the orifices in the distributor it must travel a considerable distance in order to reach the fibre cloud and thus penetration into the fibre cloud may be inadequate.

US-A-2,944,284 describes a system for the central distribution of solution binder, potentially with unspecified further additives. Binder solution is supplied along a non-rotating duct to the space between two spinning slinger plates. The plates are preferably flat discs and may alternatively be flared, so that the circumferences of the discs are further apart than are the centres. In this publication it is suggested that the slinger plate system results in atomisation of the binder solution. However, in US-A-3,343,933 it is indicated that the system of US-A-2,944,284 gives inadequate atomisation and highly variable size of the droplets of binder solution. Further, the slinger plates are shown in the drawing of the invention as having a diameter approximately 40% of that of the rotor. Thus again this system suffers from the distance required to be travelled by the atomised binder. In fact, we are not aware that a system of this nature has been used commercially.

Thus, of the large number of systems for introducing additive which have been described, there is a need for an improved system for the introduction of suspensions of solids, or other liquid compositions, into a fibre web in uniform distribution.

It would be desirable to provide a process and apparatus which may conveniently be used to introduce a slurry of particulate solids in a liquid phase, or other liquid material, into an MMVF product during or soon after fibre formation in order to benefit from the properties of the particulate additives in the mineral wool web. It would also be desirable to be able to provide an apparatus and a process for including solid, especially particulate, additives and binder within a mineral wool web in a highly uniform distribution. It would be desirable for the apparatus to be designed so as to minimise the risk of blockage and to avoid problems due to wear caused by abrasive particles in the binder solution.

The invention provides apparatus for forming an MMVF product comprising
a rotatable fiberising rotor having a fiberising periphery with a radius R and a front and a rear and which is constructed for receiving mineral melt and throwing it radially outwards from the periphery as fibres,
means for rotating the rotor comprising a rotatable shaft on which the rotor is secured and which extends rearwardly from the rotor,
a liquid flow duct which is substantially non-rotatable and which extends through the rotatable shaft,
a liquid flow outlet into which the liquid flow duct leads and which is substantially non-rotatable,
liquid distribution means for spraying liquid radially outwards forward of the rotor, wherein the distribution means are coaxial with the rotor and are mounted for rotation substantially coaxially with the rotor and have a distribution surface arranged to receive liquid from the liquid flow outlet,
characterised in that
the distribution surface is an open surface which is substantially frustoconical and has a long substantially circular edge and a short substantially circular edge and describes a substantially frustoconical zone and the liquid flow outlet is within the substantially frustoconical zone,
and the long edge is at a radius of at least 0.5 R.

The apparatus of the invention may be used in processes in which conventional or other liquid binder is distributed into the annular cloud of fibres. Preferably the novel apparatus is used for the application of a slurry of particulate additive into the annular cloud of fibres for instance as described in British Application 9524608.8 filed even date with the priority application for this application.

Accordingly the invention also provides a process of forming an MMVF product using apparatus comprising
a rotatable fiberising rotor having a fiberising periphery with a radius R and a front and a rear
a rotatable shaft on which the rotor is secured for rotation and which extends rearwardly of the rotor
a liquid flow duct which is substantially non-rotatable and which extends through the rotatable shaft and which leads into a liquid flow outlet which is substantially non-rotatable, and
liquid distribution means for spraying liquid radially outwards forward of the rotor coaxial with the rotor which is mounted for rotation substantially coaxially with the rotor and which has a distribution surface,
the process comprising applying mineral melt to the rotor while the rotor is rotating and thereby throwing the melt from the periphery as fibres, carrying the fibres forward from the front of the rotor as an annular cloud, and
passing liquid additive into the liquid flow duct and through the liquid flow outlet and onto the distribution surface and spraying the liquid additive radially outwards towards the annular cloud
characterised in that
the distribution surface is an open surface which is substantially frustoconical and has a long substantially circular edge and a short substantially circular edge and describes a substantially frustoconical zone and the liquid flow outlet is within the substantially frustoconical zone,
and the long edge is at a radius of at least 0.5 R.

In the invention the use of a substantially non-rotating liquid flow duct and liquid flow outlet prevents centrifugation and separation of a suspension of particulate material in an aqueous phase. On transfer to the rapidly rotating distribution surface having the specified size and shape requirements excellent distribution of the slurry or other liquid in a substantially radial direction and into the annular cloud of fibres is achieved. The characteristic features of the apparatus and process of the invention allow the production of a mineral wool web having an especially uniform distribution of additive. In particular a distribution in the final fibre web of solid particulate additives can be achieved which is improved over distributions obtained using prior art apparatuses and processes.

The liquid additive travels through the liquid flow duct and through the liquid flow outlet onto the distribution surface, which has the shape substantially of the inside surface of a truncated cone. As the distribution surface rotates centrifugal force causes the liquid to flow radially outwards across the distribution surface and to be flung from the long edge as droplets which penetrate into the fibre cloud as the fibres are forming.

The liquid distribution means is mounted for rotation substantially coaxially with the rotor. It has a distribution surface which is an open surface. That is, the distribution surface does not require, as in apparatus such as is shown in US-A-2944284, a pair of annular discs defining an annular passage which is filled with liquid, and instead the functional distribution surface is a single surface across which the liquid flows radially. The surface of the liquid which is not in contact with the distribution surface can be unconfined and so can be open to the atmosphere around the distribution means in the collection chamber into which the fibres are flung from the periphery of the rotor.

Although the distribution surface is open in that distribution is achieved solely by centrifugal force on that surface, if desired there may be a cover surface spaced away from the liquid on the surface to prevent or minimise the risk of fibre or other material falling onto the surface.

The distribution surface has a shape which is substantially that of the inside surface of part of a cone, that is substantially frustoconical. It describes a substantially frustoconical zone into which the liquid flow outlet discharges the additive liquid to be sprayed.

The distribution surface has two substantially parallel substantially circular edges, one long and one short. These edges may be truly circular or they may be for instance elliptical. Either or both of the edges may be corrugated due to the presence of grooves in the distribution surface, as discussed below.

The distribution surface may be part of a true truncated cone having a straight cross-section between the long and short edges. Alternatively the region between the long and short edges may be concave or convex. Where the region is concave the distribution surface may even approach the shape such that it describes a hemisphere.

Usually the cone angle between the central perpendicular and one oblique side is at least 20°, preferably at least 30° and may be 45° or greater, although it is often not more than 60° and usually not more than 75°.

In the invention the long edge is at a radius of at least 0.5 R. That is, the liquid additive is sprayed off the distribution surface at a radius of at least half that of the rotor. Preferably the long edge is at a radius of 0.55 to 1 R, more preferably 0.55 to 0.65 R. The long edge may be at a radius greater than R. However if it is at too great a radius it can interfere with fibre formation. Additionally the arrangement of other components of the overall apparatus, for instance other rotors if the apparatus comprises these, may not permit use of a distribution surface having such a large radius. Thus preferably the long edge is not at a radius greater than 1.1 R.

The long edge forms a rim from which atomised liquid is flung. The short edge is usually simply the termination of the distribution surface by the connection to the liquid flow duct or outlet, although it may be a defined rim.

The distribution surface may be arranged so that the long edge is rearward of the short edge. That is, the open distribution surface faces the rotor.

Preferably however the long edge is forward of the short edge and the open distribution surface faces the direction in which the fibres travel. This configuration is preferred since maintenance is easier and there is a lower tendency to wear and blockage than with the reverse configuration.

The distribution surface may be smooth. Alternatively it may be contoured to aid radial movement of the liquid to the long edge of the surface. Preferably it contains a plurality of grooves (ie channels) spaced around the distribution surface extending outwardly to the long edge.

Preferably the grooves extend from the short edge to the long edge. However, this is not always necessary. Some or all of the grooves may extend to the long edge from a position at which the distribution surface receives the fluid additive, if this is not at the short edge.

Preferably the distribution surface contains at least 4, more preferably at least 10 or 15, 20 or 30 grooves, most preferably at least 50 grooves and may contain 60 or 80 or even 100 or more grooves. Usually it does not contain more than 200 grooves. Each groove may have a width (between the peaks which define its side walls) of 0.5-20mm, preferably below 10mm, more preferably below 5mm, often about 1-3mm. The separation between the bases of adjacent grooves typically is 0.5-20mm, preferably below 10mm, more preferably below 5mm, often about 1-3mm. Often the distance between the peaks of each groove is substantially equal to the distance between the bases of adjacent grooves.

If rapid circumferential distribution of the liquid around the distribution surface is required, the grooves can be provided in a form such that they are rather shallow. For instance the ratio of width (substantially horizontal distance between the peaks of the side walls) and height (the substantially vertical distance from the base to the peak of the side walls) of a groove can be at least 1, often at least 1.5, preferably at least 2. These shallow grooves both direct the liquid additive from the short edge to the long edge and allow flow of liquid between grooves to aid circumferential distribution.

The grooves may be spaced substantially equidistantly around the distribution surface. In some circumstances however they can be spaced non-equidistantly.

In some forms of the apparatus of the invention it is desirable to throw the liquid from only a portion of the long edge.

Such a system can be particularly useful when the rotor is one which is mounted about a substantially horizontal axis and has a solid periphery which receives melt and throws mineral fibres off the periphery. Certain portions of the circumference of this periphery tend to produce large amounts of fibre whereas other portions produce very little fibre. For certain types of additive, a distribution of liquid additive from the liquid distribution surface is desirable such that the regions from which additive is thrown coincide with the regions from which fibres are thrown. In this way these additives can be concentrated on the region of highest fibre-formation density.

For other types of additive, in particular suspensions of particulate solids in a liquid phase which have relatively high density, it is preferred that the regions from which additive is thrown do not coincide with the regions from which fibres are thrown. It is preferred that the additive is thrown from the long edge substantially upwardly. For instance it may be thrown from a single region of the long edge centering on an angle of up to 175°, up to 150°, often up to or around 135°, out of the total 360° of the distribution surface. For some systems angles of 135° to 175°, for instance 150° to 175°, are preferred. This region is substantially all in the upper half of the distribution surface. Surprisingly, we find that even though the additive is being flung substantially upwardly and fibres are being formed substantially from the lower half of the rotor, a particularly good distribution of additive in the fibres results. We also find that this system aids in keeping the walls of the spinning chamber in which the apparatus is housed clean by minimising the amount of liquid that is thrown against the walls.

The grooves may be substantially straight. Alternatively they may have a degree of curvature. If the grooves are straight they may be arranged in a truly radial direction, that is they extend along the line of shortest distance between the long and short edges. Alternatively they may be at an angle to the truly radial direction. This latter arrangement imparts to the liquid a tangential component of velocity (in addition to the tangential component which corresponds with the velocity of the periphery of the distribution surface). This effect can also be achieved with the use of curved grooves in a spiral configuration. Grooves of these types can be arranged so as to counteract the tangential component of velocity which is inevitably imparted to the liquid by the rapid rotation of the fluid distribution means. Thus the grooves can be arranged so as to impart a component of velocity in opposition to that imparted by the rotation. This results in the liquid being thrown from the long edge of the distribution surface in a direction closer to a truly radial direction.

The cross section of any grooves may be symmetrical, and is often substantially U-shaped, preferably sinusoidal, or V-shaped. Alternatively the cross section may be non symmetrical. For instance one side wall may have a lip which projects over towards the centre of the groove, so that the side wall has a substantially wave-shaped cross section. A series of grooves, each having one wall of this configuration, can be desirable for some purposes, in particular for especial control over the movement of the liquid additive along the grooves. Such an arrangement ensures that once the liquid has been projected into a groove it remains in that groove until it reaches the long edge of the distribution surface.

The contouring of the distribution surface may be solely in the form of grooves. Alternatively additional contouring may be provided. For instance substantially circumferential contours may be provided. For instance one or more circular channels may be provided in the distribution surface. A channel of this type may extend around all or part of the surface. Generally it will cross any grooves in the distribution surface essentially at right angles.

Instead of a channel a projecting ring may be provided, in similar position. More than one channel or projecting ring may be provided, although generally a single channel or ring is provided. Generally a channel or ring is positioned at a point approximately half way between the long and short edges.

The presence of a channel or ring of this type aids circumferential distribution of the liquid additive around the distribution surface. It must be ensured that the ring is not too high, or the channel too deep, to allow the liquid additive to flow to the long edge of the distribution surface.

The liquid distribution means may be made of any suitable material, for instance steel or other metallic material. Preferably the distribution surface at least is made of a wear-resistant material such as hardened steel, metal carbide, tungsten or a ceramic material such as an aluminium oxide material. The use of a ceramic material leads to reduced wear of the surface by the coarse suspensions of particulate solids which are preferably used. It also leads to reduced corrosion and wear by incidence on the distribution surface of mineral melt or stray fibres.

The liquid distribution means is mounted to rotate, clockwise or anticlockwise, at any suitable speed. It may be arranged so as to be capable of rotating at a rotational speed different from that of the rotor, or even in a different direction. Preferably however the distribution means is mounted on the rotor so that it is rotated on the rotatable shaft with the rotor in the same direction and at the same rotational speed.

The liquid flow outlet is arranged to discharge liquid onto the distribution surface. The liquid flow outlet may be a simple orifice terminating the liquid flow duct. The diameter of this orifice may be the same as that of the liquid flow duct. It may be slightly smaller or larger. For instance the outlet may be a simple pipe bend leading from the liquid flow duct terminating in a substantially circular orifice. Alternatively the orifice may be flattened, so that it sprays the liquid additive over a predetermined angle.

The liquid flow outlet can be positioned centrally in the frustoconical zone, along its axis and is preferably close to the short edge. Alternatively it may be positioned at a point close to the distribution surface and in the space between the short and long edges, for instance at a position between the short edge and three quarters of the distance between the short and long edges, preferably between the short edge and half of this distance. In such a case the outlet can be for instance a pipe leading from the liquid flow duct. The pipe can be angled as it leaves the liquid flow duct to provide a bend. The pipe and outlet do not rotate with the liquid distribution means and are substantially non-rotatable.

The liquid flow outlet is usually fixed to the liquid flow duct such that it does not rotate relative to the duct. Since the primary atomisation of the liquid is due to the rotation of the distribution surface, rotation of the liquid flow outlet is usually unnecessary and so it is simplest for the outlet to be fixed against rotation.

The liquid flow outlet may discharge the liquid axially into the zone described by the distribution surface, at which time the liquid moves under the influence of gravity to reach the distribution surface. Alternatively the liquid flow outlet may discharge the liquid radially. In such a case the outlet may comprise one orifice, but preferably comprises at least two orifices spaced around the liquid flow duct. These may be spaced equidistantly or non-equidistantly. If a substantially uniform distribution of the liquid additive is required, preferably the orifices are spaced equidistantly. For instance it can comprise two orifices spaced diametrically apart which are sufficiently small in diameter to induce some atomisation of the liquid as it passes through the orifices.

If a non-uniform distribution of the liquid is desired, for instance if the liquid is intended to leave the distribution surface from only a part of the long edge, a non-equidistant arrangement of orifices may be chosen.

For non-uniform distribution a suitable liquid flow outlet is a slot outlet. For instance, where distribution over a single region is desired, a slot is provided from which the liquid may exit the liquid flow duct. The slot covers the angle of the distribution surface over which liquid is required to be distributed, for instance up to 175°, often up to 150°, for instance around 135°. The slot outlet is particularly useful when it is desired to throw liquid additives substantially upwardly, as described above.

The liquid flow outlet may be arranged to discharge the liquid substantially directly onto the distribution surface. Alternatively there may be a significant gap between the liquid flow outlet and the distribution surface across which the liquid travels before it reaches the distribution surface. This is particularly advantageous in combination with a plurality of radial outlets, especially those which induce some atomisation on discharge of the liquid. This preferred system maximises atomisation of the liquid during passage from the outlet to the distribution surface and on contact with the distribution surface. The gap typically has a length of at least 10mm.

Usually the liquid flow outlet is fixed against rotation although if desired it can rotate slowly provided the rate of rotation does not cause centrifugal separation of solids in a slurry passing through it.

The liquid flow duct is substantially non-rotatable. The liquid flow duct extends through the rotatable shaft on which the rotor is mounted and it is usually necessary to provide bearings between the duct and the shaft or between the duct and the rotor. These are usually roller bearings.

The liquid flow duct leads from a means of supply of the suspension of particulate solids or other liquid additive to the liquid flow outlet.

It is usually necessary to provide a sealing connection between the rotating and non-rotating parts of the apparatus to avoid as far as possible leakage of liquid back into the apparatus after discharge from the liquid flow outlet. This sealing connection may be between the liquid distribution means and the liquid flow outlet or liquid flow duct or both. Preferably it is between the liquid flow duct and the liquid distribution means. In such a case, preferably the liquid flow outlet is separated from the sealing connection by a chamber which rotates with the liquid distribution means and which has an outlet opening in its outer periphery. The chamber is usually annular. The sealing connection between the rotating and non-rotating components may be between the rear of this chamber and the liquid flow duct. More preferably, the liquid flow duct is supported by a set of roller bearings and the sealing connection is between this set of bearings and the rear of the chamber.

Such a configuration does not require a sealing connection between the rotating chamber and the liquid flow outlet. If any additive which fails to travel radially outwards along the distribution surface to its long edge or any mineral melt or stray fibres come into contact with the distribution surface and leak back into the apparatus, they move back into the rotating chamber. The rapid rotation of this chamber means that the material within it is forced centrifugally radially outwards within the chamber. Preferably the peripheral outlet from the chamber is positioned to discharge the material directly onto the distribution surface where it then travels radially outwards to the long edge.

The rotor is preferably mounted about a substantially horizontal axis and has a solid periphery and is constructed to receive melt applied onto the periphery and to throw mineral fibres off the periphery. Most preferably it is a cascade spinner containing 2, 3 or 4 such rotors. A suitable cascade spinner is described in WO92/06047. In a cascade spinner each rotor may be as described above. However, it is usually not necessary for more than two rotors to be rotors as described above. In preferred apparatuses the first rotor is not configured according to the invention. Often only the last rotor, but preferably only the last two rotors, are configured according to the invention. It is especially advantageous to provide one or more of the last two rotors with means for throwing the liquid additive substantially upwardly, as described above.

Alternatively the spinner can be of the spinning cup type described in EP-A-530,843 or of the Downey type described in US-A-2,944,284 and US-A-3,343,933.

The process of the invention may use any of the forms of apparatus according to the invention described above. In the process of the invention a liquid additive is sprayed into the annular cloud of fibres by the liquid distribution means.

The liquid additive may be any material in liquid form, for instance aqueous binder, or a dispersion (thermodynamically unstable liquid droplets in another liquid, e.g. aqueous binder) or emulsion (thermodynamically stable liquid droplets in another liquid, e.g. aqueous binder). Preferably it is a suspension of solid particulate material in a liquid phase. Preferably it is a suspension of solid particulate material in an aqueous phase. The suspension may have a density of around 1.0 g/cc or greater, usually at least 1.1 g/cc but preferably is a suspension of solid particulate material in an aqueous phase which has a density of at least 1.2 g/cc. Preferably it has a density of at least 1.3 g/cc, more preferably at least 1.4 g/cc. Usually the suspension has a density of from 1.3 to 1.9 g/cc, most preferably from 1.4 to 1.7 g/cc.

We find that when the additive is a suspension of density above 1.0g/cc it is particularly desirable to throw it from the distribution surface in a substantially upward direction, as described above.

In the process of the invention it is possible to distribute suspensions having high solids content, for instance at least 20%, often 30 to 60 or 75%, by weight solid particles, based on the total weight of suspension. These amounts generally apply to particles having a size above 5µm, preferably above 10µm. Additionally there may be smaller particles such as clay in an amount usually below 5 or 10% by weight of the slurry. The particles may be substantially spherical. Alternatively they may be elongated or fibrous. They may also be of irregular shape. The "size" of a particle refers to its maximum dimension.

The process and apparatus of the invention allow the distribution of suspensions of solids whose mean sizes are at least 10µm, often from 40µm to 100µm. Particles of mean size 150 to 250µm, often around 200µm, can be supplied.

Materials which can be suspended in the liquid, preferably aqueous, phase include waste mineral wool fibres, clay, perlite, vermiculite, pigments, aluminium hydrate, magnesium hydroxide, calcium or other similar crushed or fine-grained mineral material. Fire protective materials as described in our International application WO-A-97/20780 may be made, which application does not belong to the state of the art within the meaning of Article 54 EPC.

Water-soluble additives such as binder may be used dissolved in the aqueous phase. Additives such as emulsions of oils or other materials may also be used. Additional soluble additives such as binder may also be sprayed into the annular cloud from a position external to the annular cloud of fibres.

The MMVF materials produced by the process according to the invention may be used for any purpose known for MMVF products, eg fire insulation and protection, thermal insulation, noise reduction and regulation, construction, horticultural media, reinforcement of other products such as plastics and as a filler. The materials may be in the form of bonded batts (which may be flat or curved) or the materials may be comminuted into the granulate.

The invention will now be illustrated with reference to the accompanying drawings.

Figure 1 shows a cross-section through a rotor which forms part of an apparatus according to the invention.

Figure 2 shows a partial cross-section through a further rotor according to the invention showing an alternative distribution surface.

Figure 3 shows a front view of a further rotor according to the invention showing an alternative liquid flow outlet.

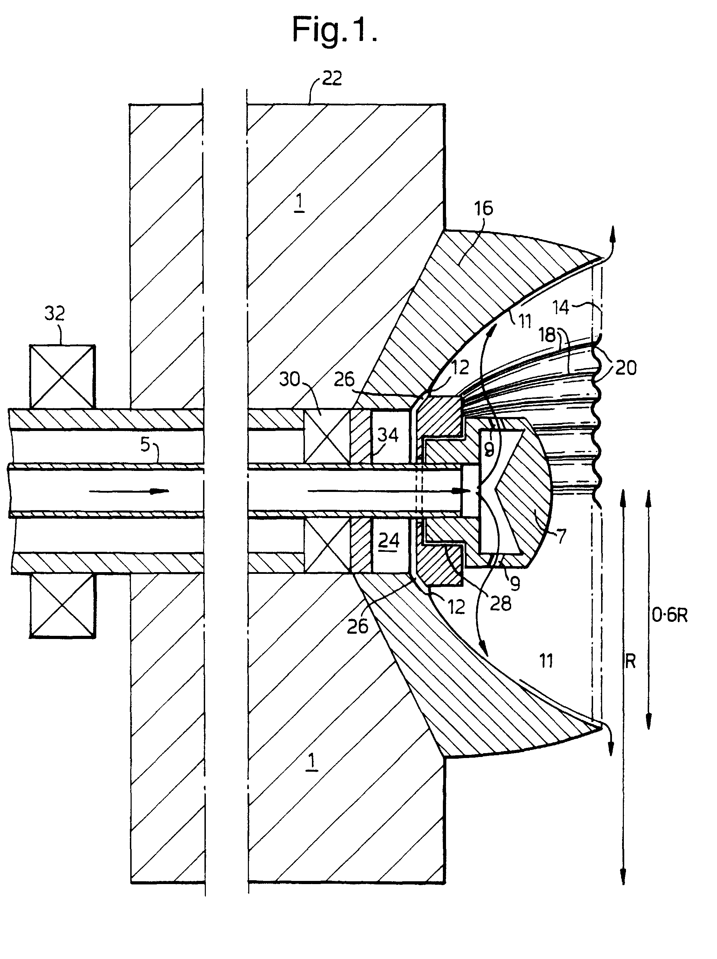

Figure 1 shows a solid rotor 1 of the type used in a cascade spinner mounted on a rotatable shaft 3. Fixed to the rotor is a liquid distribution means 16 having a distribution surface 11. The substantially frustoconical surface 11 is a concave surface containing a plurality of grooves 18, of which six are illustrated. The distribution surface has a short edge 12 and a long edge 14, the long edge 14 being forward of the short edge 12. The long edge 14 is at a radius 0.6 R, where R is the radius of the rotor. The rotor 1 is supported, on the rotating shaft 3, by roller bearings 32. The non-rotatable liquid flow duct 5 is supported on bearings 30, usually roller bearings, between the rotating shaft 3 and the non-rotatable liquid flow duct 5. The non-rotatable liquid flow duct 5 leads into and is fixed to the liquid flow outlet 7, which is also non-rotatable. This has two (or more) radially extending discharge orifices. The radially extending discharge orifices may be inclined rearwardly at an angle of 10-45° so as to ensure discharged liquid meets the distribution surface at the smallest possible radius.

In use a suspension of particulate solids in an aqueous phase is supplied (supply means not shown) to the liquid flow duct 5 which extends through the rotatable shaft 3, and into the liquid flow outlet 7. The suspension then passes through the orifices 9.

The partially atomised suspension passes across an air gap in the direction of the arrows and onto the distribution surface 11. The rapid spinning of the liquid distribution means 16 induces radial outward movement of the suspension, guided by the grooves 18, to the end points 20 of the grooves at the edge 14. From these end points the suspension is flung in atomised form from the distribution surface radially outwards and forward of the rotor.

If any suspension fails to travel radially outwards along the grooves 18, but tends to leak back into the apparatus, it passes along the inlet channel 28 into the rotating annular chamber 24. Rotation of the chamber induces the suspension to move to the outer wall of the chamber, from where it flows along outlet channel 26 onto the distribution surface at its short edge. A seal 34 is positioned between the chamber 24 and the roller bearings 30. Leakage into other regions of the apparatus is thus avoided.

Concurrently, melt is applied to the periphery 22 of the rotor 1 which is spinning rapidly and flinging the melt from the periphery as fibres. The fibres are blown forward by conventional air supply means (not shown) in an annular cloud. As the fibres are blown forward they are met by the atomised suspension from the liquid distribution means. The suspension and additives it contains penetrate the annular cloud and coat the fibres.

The fibres are then collected as a web containing uniformly distributed additive on a collector in conventional manner. The web may be subjected to cross-lapping to form a batt, and the product may be compressed and heat cured in conventional manner.

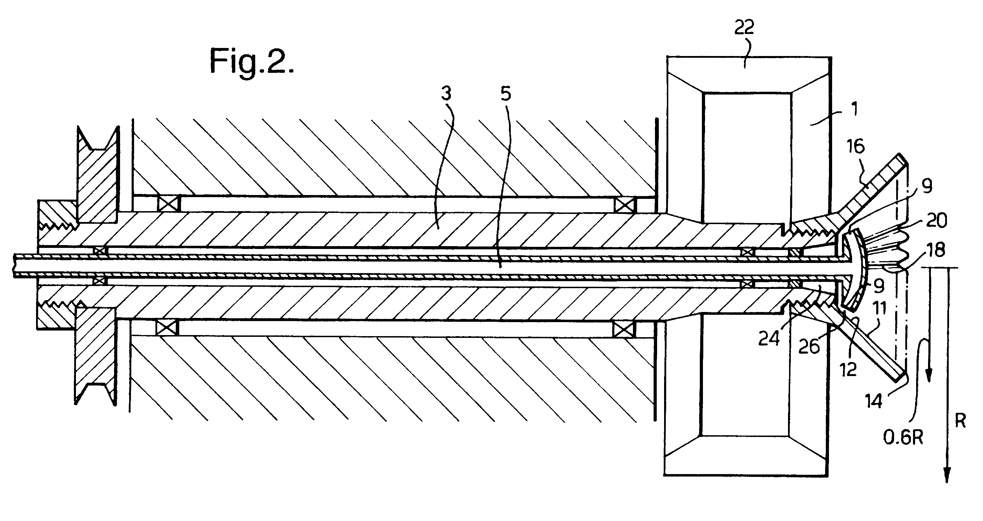

Figure 2 shows an alternative construction for the liquid distribution means 16. The distribution surface 11 is truly frustoconical having a straight cross-section from the edge 12 to the edge 14.

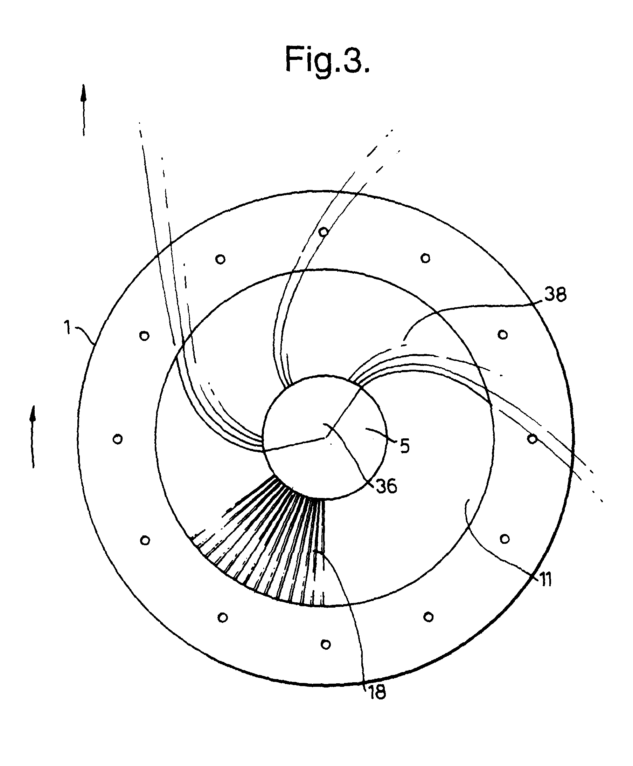

Figure 3 shows an alternative construction for the liquid flow outlet 7. In this construction it is in the form of a slot covering around 135° of the possible 360°. Liquid additive exits the liquid flow duct 5 through the slot 36 and is passed to the liquid distribution surface 11. The liquid additive flows over the region 38. The "spiral" type path of the liquid arises as a result of the rapid rotation of the distribution surface (in this embodiment, in a clockwise direction). The liquid additive is thus flung from the long edge 14 of the distribution surface in a substantially upward direction over around 135° of the circumference of the distribution surface.

## Claims

1. Apparatus for forming an MMVF product comprising
a rotatable fiberising rotor (1) having a fiberising periphery (22) with a radius R and a front and a rear and which is constructed for receiving mineral melt and throwing it radially outwards from the periphery as fibres,
means for rotating the rotor comprising a rotatable shaft (3) on which the rotor is secured and which extends rearwardly from the rotor,
a liquid flow duct (5) which is substantially non-rotatable and which extends through the rotatable shaft (3),
a liquid flow outlet (9) into which the liquid flow duct leads, and which is substantially non-rotatable,
liquid distribution means (16) for spraying liquid radially outwards forward of the rotor wherein the distribution means are coaxial with the rotor and are mounted for rotation substantially coaxially with the rotor and have a distribution surface (11) arranged to receive liquid from the liquid flow outlet (9),
characterised in that
the distribution surface (11) is an open surface which is substantially frustoconical and has a long substantially circular edge (14) and a short substantially circular edge (12) and describes a substantially frustoconical zone and the liquid flow outlet (9) is within the substantially frustoconical zone,
and the long edge (14) is at a radius of at least 0.5 R.

2. An apparatus according to claim 1 in which the long edge (14) is forward of the short edge (12).

3. An apparatus according to claim 1 or claim 2 in which the distribution surface (11) is concave.

4. An apparatus according to any preceding claim in which the distribution surface (11) contains a plurality of grooves (18) spaced around the distribution surface extending radially outwardly from the short edge (12) to the long edge (14).

5. An apparatus according to any preceding claim in which the long edge (14) is at a radius of 0.55 R to 0.65 R.

6. An apparatus according to any preceding claim in which the liquid flow outlet (9) comprises a plurality of radial outlets that are spaced by a gap from the distribution surface (11) and by which liquid can be discharged through the radial outlets and across the gap onto the distribution surface.

7. An apparatus according to any of claims 1 to 5 in which the liquid flow outlet (9) is a non-rotatable slot by which liquid can be discharged onto a proportion (38) only of the distribution surface such that in use the liquid additive is thrown from the distribution surface substantially upwardly, preferably over an angle of 150° or less.

8. An apparatus according to any preceding claim in which the distribution surface (11) is made of a ceramic material.

9. An apparatus according to any preceding claim in which there is a seal (34) between the liquid flow duct (5) and the liquid distribution means (16) and the liquid flow outlet (9) is separated from the seal by a chamber (24) which rotates with the rotor and which has a peripheral outlet (26) in communication with the distribution surface (11).

10. An apparatus according to any preceding claim in which the rotor (1) is mounted about a substantially horizontal axis and has a solid periphery (22) and is constructed to receive melt applied onto the periphery and to throw mineral fibres off the periphery.

11. An apparatus according to any preceding claim which is a cascade spinner.

12. An apparatus according to claim 11 in which the last rotor is a rotor as described in claim 1.

13. An apparatus according to claim 11 which contains four rotors of which the final two are rotors as described in claim 1.

14. An apparatus according to claim 13 in which the final three rotors are rotors as described in claim 1.

15. A process for forming an MMVF product using apparatus comprising
a rotatable fiberising rotor (1) having a fiberising periphery (22) with a radius R and a front and a rear
a rotatable shaft (3) on which the rotor is secured for rotation and which extends rearwardly of the rotor
a liquid flow duct (5) which is substantially non-rotatable and which extends through the rotatable shaft (3) and which leads into a liquid flow outlet (9) which is substantially non-rotatable, and
liquid distribution means (16) for spraying liquid radially outwards forward of the rotor coaxial with the rotor which is mounted for rotation substantially coaxially with the rotor and which has a distribution surface (11),
the process comprising applying mineral melt to the rotor (1) while the rotor is rotating and thereby throwing the melt from the periphery (22) as fibres, carrying the fibres forward from the front of the rotor as an annular cloud, and
passing liquid additive into the liquid flow duct (5) and through the liquid flow outlet (9) and onto the distribution surface (11) and spraying the liquid additive radially outwards towards the annular cloud
characterised in that
the distribution surface (11) is an open surface which is substantially frustoconical and has a long substantially circular edge (14) and a short substantially circular edge (12) and describes a substantially frustoconical zone and the liquid flow outlet (9) is within the substantially frustoconical zone,
and the long edge (14) is at a radius of at least 0.5 R

16. A process according to claim 15 in which the liquid additive is a suspension of solid particulate material in an aqueous phase which has a density of at least 1.2 g/cc.

17. A process according to claim 16 in which the suspension contains from 20 to 75% by weight solid particles, based on the total weight of suspension.

18. A process according to claim 16 or claim 17 in which the suspension has a density of from 1.4 to 1.7 g/cc.

19. A process according to any of claims 16 to 18 in which the suspension comprises a potentially unstable suspension of inorganic particulate material stabilised in suspension by clay.

## Patentansprüche

1. Vorrichtung zur Bildung eines MMVF-Produkts, umfassend
einen rotierbaren Faserbildungsrotor (1), welcher einen Faserbildungsrand (22) mit einem Radius R und eine Vorderseite und eine Rückseite aufweist und dazu konzipiert ist, mineralische Schmelze aufzunehmen und sie vom Rand aus radial nach außen als Fasern abzuschleudern,
eine Einrichtung zur Rotation des Rotors, umfassend eine rotierbare Welle (3), auf welcher der Rotor befestigt ist und die vom Rotor aus nach hinten verläuft,
eine Flüssigkeitsströmungsleitung (5), die im wesentlichen nicht rotierbar ist und durch die rotierbare Welle (3) hindurchverläuft,
einen Flüssigkeitsströmungsabfluß (9), in welchen die Flüssigkeitsströmungsleitung (5) mündet und welcher im wesentlichen nicht rotierbar ist,
eine Flüssigkeitsverteilungseinrichtung (16) zum Sprühen von Flüssigkeit radial nach außen vor den Rotor, worin die Verteilungseinrichtung koaxial mit dem Rotor ist und zur Rotation im wesentlichen koaxial mit dem Rotor montiert ist und eine Verteilungsoberfläche (11) besitzt, die so angeordnet ist, daß sie Flüssigkeit aus dem Flüssigkeitsströmungsabfluß (9) aufnimmt,
dadurch gekennzeichnet, daß die Verteilungsoberfläche (11) eine offene Oberfläche ist, die im wesentlichen kegelstumpfförmig ist und eine lange im wesentlichen kreisförmige Kante (14) und eine kurze im wesentlichen kreisförmige Kante (12) besitzt und einen im wesentlichen kegelstumpfförmigen Bereich beschreibt, und der Flüssigkeitsströmungsabfluß (9) innerhalb des im wesentlichen kegelstumpfförmigen Bereichs liegt, und sich die lange Kante (14) bei einem Radius von mindestens 0,5 R befindet.

2. Vorrichtung nach Anspruch 1, worin die lange Kante (14) sich vor der kurzen Kante (12) befindet.

3. Vorrichtung nach Anspruch 1 oder Anspruch 2, worin die Verteilungsoberfläche (11) konkav ist.

4. Vorrichtung nach irgendeinem vorhergehenden Anspruch, worin die Verteilungsoberfläche (11) eine Mehrzahl von um die Verteilungsoberfläche herum beabstandeten Rillen (18) beinhaltet, die von der kurzen Kante (12) zur langen Kante (14) hin radial nach außen verlaufen.

5. Vorrichtung nach irgendeinem vorhergehenden Anspruch, worin sich die lange Kante (14) bei einem Radius von 0,55 R bis 0,65 R befindet.

6. Vorrichtung nach irgendeinem vorhergehenden Anspruch, worin der Flüssigkeitsströmungsabfluß (9) eine Mehrzahl von radialen Abflüssen umfaßt, die durch einen Spalt von der Verteilungsoberfläche (11) beabstandet sind und durch welche Flüssigkeit durch die radialen Abflüsse und über den Spalt auf die Verteilungsoberfläche ausgebracht werden kann.

7. Vorrichtung nach irgendeinem der Ansprüche 1 bis 5, worin der Flüssigkeitsströmungsabfluß (9) ein nicht rotierbarer Schlitz ist, durch welchen Flüssigkeit auf nur einen Teilbereich (38) der Verteilungsoberfläche ausgebracht werden kann, so daß das flüssige Additiv im Einsatz von der Verteilungsoberfläche aus, vorzugsweise über einem Winkel von 150° oder weniger, im wesentlichen nach oben geschleudert wird.

8. Vorrichtung nach irgendeinem vorhergehenden Anspruch, worin die Verteilungsoberfläche (11) aus einem keramischen Material besteht.

9. Vorrichtung nach irgendeinem vorhergehenden Anspruch, worin eine Dichtung (34) zwischen der Flüssigkeitsströmungsleitung (5) und der Flüssigkeitsverteilungseinrichtung (16) vorhanden ist und der Flüssigkeitsströmungsabfluß (9) von der Dichtung durch eine Kammer (24) getrennt ist, die mit dem Rotor rotiert und einen entlang des Umfangs verlaufenden Abfluß (26) besitzt, der mit der Verteilungsoberfläche (11) in Verbindung steht.

10. Vorrichtung nach irgendeinem vorhergehenden Anspruch, worin der Rotor (1) um eine im wesentlichen horizontale Achse herum montiert ist und einen massiven Rand (22) aufweist und dazu konzipiert ist, auf den Rand aufgebrachte Schmelze aufzunehmen und Mineralfasern vom Rand abzuschleudern.

11. Vorrichtung nach irgendeinem vorhergehenden Anspruch, bei welcher es sich um eine Kaskaden-Schleudervorrichtung handelt.

12. Vorrichtung nach Anspruch 11, worin der letzte Rotor ein wie in Anspruch 1 beschriebener Rotor ist.

13. Vorrichtung nach Anspruch 11, welche vier Rotoren enthält, von denen die letzten beiden wie in Anspruch 1 beschriebene Rotoren sind.

14. Vorrichtung nach Anspruch 13, worin die letzten drei Rotoren wie in Anspruch 1 beschriebene Rotoren sind.

15. Verfahren zur Bildung eines MMVF-Produkts unter Verwendung einer Vorrichtung, welche umfaßt
einen rotierbaren Faserbildungsrotor (1), der einen Faserbildungsrand (22) mit einem Radius R und eine Vorderseite und eine Rückseite aufweist,
eine rotierbare Welle (3), auf welcher der Rotor zur Rotation befestigt ist und welche hinter dem Rotor verläuft,
eine Flüssigkeitsströmungsleitung (5), die im wesentlichen nicht rotierbar ist und durch die rotierbare Welle (3) hindurchverläuft und in einen Flüssigkeitsströmungsabfluß (9) mündet, welcher im wesentlichen nicht rotierbar ist, und
eine Flüssigkeitsverteilungseinrichtung (16) zum Sprühen von Flüssigkeit radial nach außen vor den Rotor koaxial mit dem Rotor, welche zur Rotation im wesentlichen koaxial mit dem Rotor montiert ist und eine Verteilungsoberfläche (11) aufweist,
wobei das Verfahren umfaßt das Aufbringen mineralischer Schmelze auf den Rotor (1), während der Rotor rotiert, wodurch die Schmelze vom Rand (22) als Fasern abgeschleudert wird, wobei die Fasern als ringförmige Wolke vor die Vorderseite des Rotors getragen werden, und das Einleiten von flüssigem Additiv in die Flüssigkeitsströmungsleitung (5) und durch den Flüssigkeitsströmungsabfluß (9) und auf die Verteilungsoberfläche (11) und das Sprühen des flüssigen Additivs radial nach außen zur ringförmigen Wolke hin,
dadurch gekennzeichnet, daß die Verteilungsoberfläche (11) eine offene Oberfläche ist, die im wesentlichen kegelstumpfförmig ist und eine lange im wesentlichen kreisförmige Kante (14) und eine kurze im wesentlichen kreisförmige Kante (12) besitzt und einen im wesentlichen kegelstumpfförmigen Bereich beschreibt, und der Flüssigkeitsströmungsabfluß (9) innerhalb des im wesentlichen kegelstumpfförmigen Bereichs liegt, und sich die lange Kante (14) bei einem Radius von mindestens 0,5 R befindet.

16. Verfahren nach Anspruch 15, worin das flüssige Additiv eine Suspension von festem teilchenförmigem Material in einer wässrigen Phase ist, welche eine Dichte von mindestens 1,2 g/cm³ aufweist.

17. Verfahren nach Anspruch 16, worin die Suspension 20 bis 75 Gew.-% feste Teilchen, bezogen auf das Gesamtgewicht der Suspension, enthält.

18. Verfahren nach Anspruch 16 oder Anspruch 17, worin die Suspension eine Dichte von 1,4 bis 1,7 g/cm³ aufweist.

19. Verfahren nach irgendeinem der Ansprüche 16 bis 18, worin die Suspension eine potentiell instabile Suspension von anorganischem teilchenförmigem Material umfaßt, welches in der Suspension durch Ton stabilisiert wird.

## Revendications

1. Appareil de formation d'un produit MMVF, comprenant :
un moteur rotatif (1) de fibrage ayant une périphérie (22) de fibrage de rayon R et une partie avant et une partie arrière, et qui est construit afin qu'il reçoive une matière minérale fondue et la projette radialement vers l'extérieur depuis la périphérie sous forme de fibres,
un dispositif d'entraînement en rotation du rotor, comprenant un arbre rotatif (3) sur lequel est fixé le rotor et qui s'étend vers l'arrière du rotor,
un conduit (5) de circulation de liquide qui ne tourne pratiquement pas et qui s'étend dans l'arbre rotatif (3),
une sortie (9) de liquide dans laquelle parvient le conduit de liquide et qui ne tourne pratiquement pas, et
un dispositif (16) de distribution de liquide destiné à pulvériser le liquide radialement vers l'extérieur en avant du rotor, le dispositif de distribution étant coaxial au rotor et étant monté afin qu'il tourne de façon pratiquement coaxiale au rotor et qu'il possède une surface de distribution (11) disposée afin qu'elle reçoive le liquide de la sortie (9) de liquide,
caractérisé en ce que :
la surface (11) de distribution est une surface libre qui est pratiquement tronconique et a un bord long pratiquement circulaire (14) et un bord court pratiquement circulaire (12) et qui décrit une zone pratiquement tronconique, et la sortie (9) de liquide se trouve à l'intérieur de la zone tronconique, et
le bord long (14) se trouve à un rayon au moins égal à 0,5 R.

2. Appareil selon la revendication 1, dans lequel le bord long (14) est en avant du bord court (12).

3. Appareil selon la revendication 1 ou 2, dans lequel la surface de distribution (11) est concave.

4. Appareil selon l'une quelconque des revendications précédentes, dans lequel la surface de distribution (11) contient plusieurs gorges (18) espacées autour de la surface de distribution et s'étendant radialement vers l'extérieur du bord court (12) vers le bord long (14).

5. Appareil selon l'une quelconque des revendications précédentes, dans lequel le bord long (14) se trouve à un rayon compris entre 0,55 R et 0,65 R.

6. Appareil selon l'une quelconque des revendications précédentes, dans lequel la sortie (9) de liquide comprend plusieurs sorties radiales qui sont séparées de la surface de distribution (11) par un espace et grâce à laquelle le liquide peut être évacué par les sorties radiales et dans l'espace vers la surface de distribution.

7. Appareil selon l'une des revendications 1 à 5, dans lequel la sortie (9) de circulation de liquide est une fente non rotative par laquelle un liquide peut être évacué sur une proportion seulement (38) de la surface de distribution afin que, pendant l'utilisation, l'adjuvant liquide soit projeté par la surface de distribution pratiquement vers le haut, de préférence sur un angle inférieur ou égal à 150°.

8. Appareil selon l'une quelconque des revendications précédentes, dans lequel la surface de distribution (11) est formée d'un matériau céramique.

9. Appareil selon l'une quelconque des revendications précédentes, dans lequel un joint d'étanchéité (34) est placé entre le conduit (5) de circulation de liquide et le dispositif (16) de distribution de liquide, et la sortie (9) de circulation de liquide est séparée du joint d'étanchéité par une chambre (24) qui tourne avec le rotor et qui a une sortie périphérique (26) qui communique avec la surface (11) de distribution.

10. Appareil selon l'une quelconque des revendications précédentes, dans lequel le rotor (1) est monté autour d'un axe pratiquement horizontal et a une périphérie pleine (22) et une construction telle qu'il peut recevoir la matière fondue appliquée à la périphérie et peut projeter des fibres minérales par la périphérie.

11. Appareil selon l'une quelconque des revendications précédentes, qui est sous forme d'un appareil de filage en cascade.

12. Appareil selon la revendication 11, dans lequel le dernier rotor est un rotor tel que décrit dans la revendication 1.

13. Appareil selon la revendication 11, qui contient quatre rotors dont les deux rotors finaux sont des rotors tels que décrits dans la revendication 1.

14. Appareil selon la revendication 13, dans lequel les trois rotors finaux sont des rotors tels que décrits dans la revendication 1.

15. Procédé de formation d'un produit MMVF à l'aide d'un appareil comprenant :
un rotor rotatif (1) de fibrage ayant une périphérie de fibrage (22) de rayon R et une partie avant et une partie arrière,
un arbre rotatif (3) sur lequel le rotor est fixé afin qu'il tourne et qui s'étend radialement en arrière du rotor,
un conduit (5) de circulation de liquide qui ne tourne pratiquement pas et qui s'étend dans l'arbre rotatif (3) et conduit à une sortie (9) de liquide qui n'est pratiquement pas rotative, et
un dispositif (16) de distribution de liquide destiné à pulvériser le liquide radialement vers l'extérieur en avant du rotor et coaxial au rotor, le dispositif étant monté afin qu'il tourne pratiquement coaxialement au rotor et ayant une surface de distribution (11),
le procédé comprenant l'application d'une matière minérale fondue au rotor (1) lorsque celui-ci tourne avec ainsi projection de la matière fondue par la périphérie (22) sous forme de fibres, l'entraînement des fibres vers l'avant du rotor sous forme d'un nuage annulaire, et
le passage d'un adjuvant liquide dans le conduit (5) de circulation de liquide et par la sortie (9) de liquide et sur la surface de distribution (11), et la pulvérisation de l'adjuvant liquide radialement vers l'extérieur vers le nuage annulaire,
caractérisé en ce que :
la surface de distribution (11) est une surface libre qui est pratiquement tronconique et qui a un bord long pratiquement circulaire (14) et un bord court pratiquement circulaire (12) et qui décrit une zone pratiquement tronconique, et la sortie de liquide (9) se trouve à l'intérieur de la zone pratiquement tronconique, et
le bord long (14) se trouve à un rayon au moins égal à 0,5 R.

16. Procédé selon la revendication 15, dans lequel l'adjuvant liquide est une suspension d'une matière particulaire solide dans une phase aqueuse qui a une masse volumique au moins égale à 1,2 g/cm³.

17. Procédé selon la revendication 16, dans lequel la suspension contient 20 à 75 % en poids de particules solides, par rapport au poids total de la suspension.

18. Procédé selon la revendication 16 ou 17, dans lequel la suspension a une masse volumique comprise entre 1,4 et 1,7 g/cm³.

19. Procédé selon l'une quelconque des revendications 16 à 18, dans lequel la suspension contient une suspension potentiellement instable d'une matière particulaire minérale stabilisée en suspension par de l'argile.
